# EUROPÄISCHE PATENTSCHRIFT

(11) **EP 3 920 368 B1**
(45) Veröffentlichungstag und Bekanntmachung des Hinweises auf die Patenterteilung: **26.08.2026**
(21) Anmeldenummer: 21173373.8
(22) Anmeldetag: 11.05.2021
(51) Int. Cl.: H02J 7/00, B60L 53/64, B60L 53/67, B60L 53/68

(54) **SYSTEM ZUM ENERGIEMANAGEMENT VON BATTERIEGESPEISTEN FLURFÖRDERZEUGEN**
ENERGY MANAGEMENT SYSTEM FOR BATTERY-FED INDUSTRIAL TRUCKS
SYSTÈME DE GESTION ÉNERGÉTIQUE DE CHARIOTS DE MANUTENTION ALIMENTÉS PAR BATTERIE

(30) Priorität: 04.06.2020 DE 102020114866
(43) Veröffentlichungstag der Anmeldung: 08.12.2021
(73) Patentinhaber: Jungheinrich Aktiengesellschaft, 22047 Hamburg (DE)
(72) Erfinder: Mahler, Arne, 24558 Henstedt-Ulzburg (DE)
(74) Vertreter: Hauck Patent- und Rechtsanwälte PartmbB

(56) Entgegenhaltungen:
- EP-A2- 2 213 611
- DE-A1- 102017 128 590
- US-A1- 2017 259 683

## Beschreibung

Die vorliegende Erfindung betrifft ein System zum Energiemanagement von batteriegespeisten Flurförderzeugen, das eine Energiesteuereinheit aufweist.

Die vorliegende Erfindung betrifft eine Optimierung des Energieeinsatzes und damit verbunden eine Kostenreduktion beim Einsatz von batteriegespeisten Flurförderzeugen. Insbesondere mit dem zunehmenden Einsatz von erneuerbaren Energien kann der aktuelle Preis für die elektrische Leistung mitunter auch im Laufe des Tages stark schwanken. Hinzu kommt, dass elektrische Versorgungsnetze zunehmend auf intelligente Verbraucher und Abnehmer angewiesen sind, um eine gute Netzstabilität und -qualität sicherzustellen.

Aus DE 10 2012 212 878 A1 ist ein Energieversorgungssystem mit einer Solarenergie-Erzeugungseinrichtung und einer Energiespeichereinrichtung bekannt geworden, wobei das Laden und Entladen der Energiespeichereinrichtung in Übereinstimmung mit einem vorbestimmten Lade-Entlade-Plan gesteuert wird.

Aus WO 2011/092821 A1 ist ein Verfahren bekannt geworden, bei dem die aus einem Stromnetz abgerufene Energiemenge in Abhängigkeit der Stromkosten, der benötigten Energiemenge, der lokal erzeugten Energie und des Ladezustandes eines Energiespeichers ermittelt wird.

Aus US 10,011,183 B2 ist ein Verfahren zum Laden eines elektrisch angetriebenen Fahrzeugs bekannt geworden, bei dem das Fahrzeug von einer lokalen Energiequelle geladen wird, abhängig von dem erwarteten Betrieb des elektrisch angetriebenen Flurförderzeugs.

Aus DE 10 2017 128 590 A1 ist ein Verfahren zum Koordinieren von Ladevorgängen der Batterien mehrerer Flurförderzeuge bekannt geworden, wobei eine zentrale Steuereinheit Betriebsdaten der Batterien kabellos empfängt und Belegungszustände mehrerer Ladegeräte überwacht. Die zentrale Steuereinheit sendet abhängig von den Betriebsdaten der Batterien und der Belegung der Ladegeräte eine Ladeerlaubnis kabellos an nicht mit den Ladegeräten verbundene Flurförderzeuge. Diese kabellos ausgetauschten Betriebsdaten umfassen auch die aktuellen Ladezustände der Batterien der Flurförderzeuge.

Bei dem Einsatz von batteriegespeisten Flurförderzeugen ist es bekannt, diese über ein Leitsystem an ein Warehouse-Management-System (WMS) anzuschließen. Auch ist es bekannt, dass automatisch geführte Flurförderzeuge (AGV) zum Ende ihres elektrischen Speichers automatisch eine Ladestation zum erneuten Aufladen anfahren.

Der Erfindung liegt die Aufgabe zugrunde, ein Energiemanagementsystem für batteriegespeiste Flurförderzeuge bereitzustellen, das bestehende Systeme integriert und zugleich das Laden und den Einsatz der Flurförderzeuge optimiert.

Erfindungsgemäß wird die Aufgabe durch ein System zum Energiemanagement mit den Merkmalen aus Anspruch 1 gelöst. Vorteilhafte Ausgestaltungen bilden die Gegenstände der Unteransprüche.

Das erfindungsgemäße System zum Energiemanagement besitzt die Merkmale aus Anspruch 1. Das System ist vorgesehen und geeignet, die Energieentnahme aus dem elektrischen Versorgungsnetz für eine Vielzahl von batteriegespeisten Flurförderzeugen zu koordinieren. Hierfür ist eine Energiesteuereinheit vorgesehen, an der Daten zum aktuellen Ladezustand der Batterien von mehreren Flurförderzeugen anliegen, Daten zu einem voraussichtlichen Bedarf an Flurförderzeugen und Daten zur Belegung von Ladegeräten. Diese Daten betreffen also die momentan in den Flurförderzeugen gespeicherte elektrische Energie, den zu erwartenden Energiebedarf der Flurförderzeuge und die Verfügbarkeit der Ladegeräte. Die Energiesteuereinheit ist dazu ausgebildet, aus diesen anliegenden Daten für ein Flurförderzeug zu ermitteln, zu welchem Zeitpunkt es zu laden ist und ebenfalls kann der Zeitpunkt bestimmt werden, wann es für den voraussichtlichen Bedarf an Flurförderzeugen eingesetzt werden kann. Das erfindungsgemäße Energiemanagement geht damit über den Fall eines reinen Lademanagements, das abhängig vom Ladezustand der Batterie einen Ladenzeitpunkt bestimmt, deutlich hinaus. Bei dem erfindungsgemäßen System wird auch berücksichtigt, wie groß der voraussichtliche Bedarf an Flurförderzeugen ist und wann folglich das Flurförderzeug voraussichtlich eingesetzt wird. Diese Abstimmung der beiden Zeitpunkte für Laden und Einsatz des Flurförderzeugs erfolgt vor dem Hintergrund der Verfügbarkeit von Ladegeräten für das Flurförderzeug. Das Energiemanagementsystem schafft damit ein effizientes Mittel, mit dem eine Flotte von Flurförderzeugen effizient eingesetzt und koordiniert werden kann.

Das erfindungsgemäße System weist ein Leitsystem für die Flurförderzeuge auf, das dazu ausgebildet ist, Fahraufträge für einzelne Flurförderzeuge zu generieren und an diese zu senden. Ein Fahrauftrag umfasst beispielsweise eine Anfahrtstrecke zu einer aufzunehmenden Ware, das Aufnehmen der Ware und eine Transportstrecke, auf der die aufgenommene Ware an ihren Zielort transportiert werden soll. Bevorzugt ist das Leitsystem ausgebildet, von der Steuereinheit einen Ladebefehl für ein Flurförderzeug zu empfangen und diesen an das entsprechende Flurförderzeug weiterzuleiten. Dieses Weiterleiten kann unter Berücksichtigung eines automatisch umzusetzenden Fahrauftrags erfolgen. In einer bevorzugten Weiterbildung kann das Ladesystem auch von der Steuereinheit einen Ladebefehl für ein Flurförderzeug empfangen und diesen Ladebefehl an das entsprechende Flurförderzeug weiterleiten. Der empfangene Ladebefehl bewirkt, dass das Flurförderzeug, insbesondere als selbsttätig fahrendes und lenkendes Flurförderzeug, eine zugeordnete Ladestation anfährt und entsprechend ein Ladevorgang eingeleitet wird. Das Leitsystem ist erfindungsgemäß dazu ausgebildet, Daten von einem Lagerverwaltungssystem zu empfangen und diese bei der Bestimmung des voraussichtlichen Bedarfs an Flurförderzeugen auszuwerten. Auf diese Weise kann das Leitsystem auf aktuelle Daten zurückgreifen und muss nicht auf empirische oder geschätzte Daten zurückgreifen.

Bevorzugt weisen die batteriegespeisten Flurförderzeuge für das Energiemanagementsystem mindestens ein automatisch geführtes Fahrzeug (Automated Guided Vehikel) (AGV) auf. Automatisch geführte Flurförderzeuge empfangen einen Fahrauftrag und setzten diesen automatisch um. Gerade bei automatisch geführten Flurförderzeugen kann das erfindungsgemäße Energiesystem sehr vorteilhaft eingesetzt werden. Aus einem Warehouse-Management-System (WMS) sind beispielsweise die Menge der abzuarbeitenden Aufträge sowie deren zeitlichen Vorgaben bekannt. Mithin kann die koordinierende Energiesteuereinheit sehr zuverlässig auf den voraussichtlichen Bedarf an Flurförderzeugen zurückgreifen. Aber auch bei manuell geführten Flurförderzeugen ergeben sich Vorteile des Energiesysteme, wenn die Benutzer sich an übermittelte Vorgaben zu Ladehinweisen halten und die entsprechend umsetzen. Diese Vorgaben können den Benutzern optischen und/oder akustisch an dem Flurförderzeug angezeigt werden.

Weiter bevorzugt ist die Energiesteuereinheit dazu ausgebildet, Kenngrößen für einen aktuellen Zustand eines Stromnetzwerks zu empfangen und einen Lade- und/oder einen Entladevorgang von mindestens einer der Batterien zur Stützung des Stromnetzes zu steuern. Wichtiger Kernaspekt dieser Weiterbildung ist, dass die Energiesteuereinheit den aktuellen Zustand des Stromnetzes überwacht und den Lade- und/oder Entladevorgang der Flurförderzeuge entsprechend darauf abgestimmt steuert. Der aktuelle Zustand des Stromnetzes, der beispielsweise einen Eingriff über eine Ansteuerung der Batterien erforderlich machen kann, kann beispielsweise Über- und Unterfrequenzen oder auch Über- und Unterspannungen des elektrischen Versorgungsnetzes betreffen. Auch Veränderungen in dem Leistungsfaktor können im begrenzten Maße netzstützende Funktionen ausüben. Insbesondere der Umstand, dass diese netzstützende Funktion unter Verwendung des voraussichtlichen Bedarfs an Flurförderzeugen geschieht, macht deutlich, dass die netzgestützte Funktion nicht notwendig zu einem eingeschränkten Einsatz der Flurförderzeuge führt. Das kurzfristige Einspeisen von elektrischer Leistung aus den mit dem Ladegerät verbundenen Batterien reduziert zwar deren Ladestand, führt aber noch nicht dazu, dass der voraussichtliche Bedarf an Flurförderzeug nicht eingehalten werden kann.

In einer bevorzugten Weiterbildung ist die Steuereinheit dazu ausgebildet, zwischen mindestens zwei unterschiedlichen elektrischen Versorgungsnetzen zur Versorgung der Ladegeräte auszuwählen und entsprechend einem aktuellen Bezugspreis für elektrische Leistung zwischen den unterschiedlichen Versorgungsnetzen auszuwählen. Diese Ausgestaltung der Steuereinheit dient der Kostenreduktion. Bei den mindestens zwei elektrischen Versorgungsnetzen kann es sich beispielsweise um das öffentliche elektrische Versorgungsnetz und ein privates, beispielsweise durch eine Photovoltaikanlage gespeistes Versorgungsnetz handeln. Die Steuereinheit wird dann in die Möglichkeit versetzt, die Kosten dieser beiden Versorgungsnetze im Hinblick auf die aktuellen Bezugspreise miteinander zu vergleichen und entsprechend umzuschalten. Analog kann auch vorgesehen sein, die Steuereinheit dahingehend auszubilden, elektrische Leistung aus den angeschlossenen Batterien in das elektrische Versorgungsnetz einzuspeisen. Dies erfolgt, wie bereits erwähnt, bevorzugt unter Gesichtspunkten der Netzstabilisierung. Es ist aber auch möglich, dies unter Kostengesichtspunkten vorzunehmen, wenn beispielsweise der gezahlte Preis für eingespeiste elektrische Leistung besonders hoch ist. Auch hier soll natürlich die Einsatzmöglichkeit der Flurförderzeuge nicht eingeschränkt werden, sondern allenfalls zusätzliche, voraussichtlich für die Flurförderzeuge nicht benötigte Energie eingespeist werden.

Der voraussichtliche Bedarf kann sich hierbei auf einen voraussichtlichen Energiebedarf der Flurförderzeuge beziehen oder auf eine voraussichtlich erforderliche Anzahl von einzusetzenden Flurförderzeugen. Für den voraussichtlichen Bedarf kann beispielsweise auch die Information von Logistikunternehmen berücksichtigt werden. Das Lagerverwaltungssystem ist in diesem Fall dazu ausgebildet, Daten von einem Logistikunternehmen für ein- und auszulagernden Waren zu empfangen und an das Leitsystem zur Ermittlung des voraussichtlichen Bedarfs bereitzustellen. Auf diese Weise kann beispielsweise sichergestellt werden, dass, wenn ein Lkw mit einzulagernder Ware eintrifft, ausreichend geladene Flurförderzeuge zur Verfügung stehen. Ebenso ist beispielsweise auch bekannt, dass, wenn ein zu beladender Lkw eine fest vorgegebene Abfahrtszeit hat, der Ladevorgang unter erhöhtem Einsatz der Flurförderzeuge rechtzeitig abgeschlossen werden muss. Durch die Berücksichtigung dieser Daten für das Logistikunternehmen ist ein nahtloses Zusammenspiel mit dem Warenstrom in das Lager hinein und aus dem Lager heraus möglich. Bevorzugt umfassen die von dem Lagerverwaltungssystem empfangenen Daten aus dem Logistikunternehmen eine oder mehrere der folgenden Angaben: Größe, Gewicht etc. zu einer ein- bzw. auszulagernden Ware, Angaben zu einer Ankunfts- bzw. Abholzeit der Ware, Angaben zur Stückzahl der Ware, Angabe zu etwaigen Verspätungen bei Anlieferung bzw. Abholung der Ware, Angaben zu einem Zeitfenster für das Anliefern bzw. Abholen der Ware und Angaben zu besonderen Transporterfordernissen für die Ware. Diese Informationen helfen dem Energiemanagementsystem und dem Warehouse-Management bei der Planung des Bedarfs und dem zu erwartenden Einsatz der Flurförderzeuge.

Das erfindungsgemäße System zum Energiemanagement wird nachfolgend in einem Blockdiagramm näher erläutert.

Im Zentrum steht das Energiemanagementsystem 10 als Energiesteuereinheit, das vier Module für den Ladevorgang besitzt. Das Modul 12 betrifft ein produktionsoptimiertes Laden, das Modul 14 betrifft ein aktives Lastmanagement, das Modul 18 betrifft ein marktpreisoptimiertes Laden und das Modul 16 betrifft ein inverses Laden bzw. ein Zurückspeisen in das elektrische Versorgungsnetz.

Das Modul zum produktionsoptimierten Laden 12 arbeitet mit den folgenden Informationen:
- Ladezustand der Batterien in den AGVs 44 und deren Restlaufzeit,
- Voraussichtlicher Bedarf an AGVs, berechnet durch ein Warehouse-Management-System 46 und
- Ladezustand von an Ladegeräten 42 angeschlossenen Batterien 44 und deren Restlaufzeit.

Aus diesen Größen stellt das Modul 12 eine Ladestrategie für die einzelnen Flurförderzeuge bereit und legt fest, zu welchem Zeitpunkt welche Batterie des Flurförderzeugs geladen werden soll.

Das Modul 14 zum aktiven Lastmanagement versucht, die aus dem elektrischen Versorgungsnetz entnommene Leistung nach Möglichkeit über den Tagesablauf zu verstetigen. Hiermit soll vermieden werden, dass beispielsweise zu einem Schichtwechsel oder einem anderen Zeitpunkt eine zu große Last aus dem elektrischen Versorgungsnetz entnommen wird. Es wird durch das Modul 14 sichergestellt, dass eine möglichst gleichmäßige Leistungsentnahme erfolgt.

Das marktpreisorientierte Modul 18 berücksichtigt beim Festlegen des Ladezeitpunkts Informationen, die aus dem Energiehandel 20 stammen. Der Energiehandel 20 greift auf Informationen der elektrischen Versorgungsunternehmen (EVU) 22, der Netzbetreiber 24 und von weiteren Energieproduzenten 26 zurück. Anhand dieser Informationen ermittelt das Modul 20 aktuelle Preise für das Bereitstellen von elektrischer Leistung und, falls erforderlich, auch für das Einspeisen von elektrischer Leistung. Diese Informationen werden über eine Schnittstelle 28 mit dem Energiemanagementsystem 10 ausgetauscht und können beim Modul 18 für marktpreisoptimiertes Laden berücksichtigt werden. Das Modul 18 für marktpreisoptimiertes Laden kann im Ergebnis dazu führen, dass beispielsweise aufgrund eines Tiefpreises für den Strombezugspreis es sinnvoll ist, die vorhandenen Batterien soweit wie möglich vollzuladen und auch eventuelle lokale Pufferspeicher zu laden. Diese Ladevorgang erfolgt unabhängig von tatsächlichem logistischem Bedarf. Ebenfalls kann das Modul für marktpreisoptimiertes Laden 18 für den Fall, dass der Strombezugspreis einen hohen Wert annimmt, lokale Pufferspeicher leeren, etwaige Photovoltaikanlagen nutzen und ansonsten das Laden von Batterien auf das absolut notwendige Minimum einschränken. Auch kann das Modul zum marktpreisoptimierten Laden 18 in diesem Fall beispielsweise umschalten, um auf andere Energieversorgungsquellen zurückzugreifen. Das Modul 16 für das inverse Laden bzw. das Rückspeisen in das Netz nutzt ebenfalls die über die Schnittstelle anliegenden Daten und stellt Abschätzungen darüber an, ob in dem System gespeicherte elektrische Energie in das elektrische Versorgungsnetz zurückgespeist werden kann, um hierdurch einen zusätzlichen Gewinn zu erzielen.

Das Energiemanagementsystem ist mit lokalen Energieerzeugern bzw. Speichern 30 verbunden. Hierbei kann es sich um Pufferspeicher (Akkumulatoren) handeln, wie sie beispielsweise in der Nähe der Ladegeräte oder auch zentral in dem Lager eingerichtet werden können. Die Pufferspeicher können elektrische Energie speichern und erforderlichenfalls wieder abgeben, wobei diese die elektrische Energie aus dem elektrischen Versorgungsnetz oder von einem lokalen Energieerzeuger 30 speichern und die Energie an dieses oder an die Flurförderzeugen abgeben. Eine Photovoltaikanlage 34 ist beispielsweise eine Unterstützung für das Energiemanagementsystem und erlaubt es, zusätzlich elektrische Leistung bereitzustellen.

Die vier Module 12, 14, 16, 18 des Energiemanagementsystems sind untereinander abgestimmt. Vorrangig wird das produktionsoptimierte Laden 12 durchgeführt, damit die Verfügbarkeit der Flurförderzeuge im Lager und damit der Produktionsfluss gewährleistet wird. Im zweiten Rang der Priorität erfolgt das marktpreisoptimierte Laden 18 sowie die Netzrückspeisung 16, gefolgt von dem aktiven Lastmanagement 14, das Stromspitzen und damit Kostensprünge im Strombezug vermeidet. Sollte das aktive Lastmanagement 14 eingreifen, da Stromspitzen in der innerbetrieblichen Infrastruktur des Stromnetzes vermieden werden müssen, so ist es höherrangig als das marktpreisoptimierte Laden und das inverse Laden. Dies ergibt sich aus der technischen Notwendigkeit für das Energiemanagementsystem Strom- und Spannungsspitzen zu vermeiden. Das Energiemanagementsystem ist besonders dann effektiv, wenn die Flurförderzeuge mit Lithium-Ionen-Batterien arbeiten, da diese auch ein teilweises Laden und Zwischenladen zulassen und so flexibel eingesetzt werden können.

Über die Schnittstellen 36 und 38 kommuniziert das Energiemanagementsystem 10 mit einem AGV-Leitsystem 40 und den Ladegeräten 42. Weiterer Bestandteil des AGV-Leitsystems 40 ist ein direkter logischer Datenaustausch mit den Ladegeräten 42 und den AGVs 44 mit ihren jeweils zugehörigen Batterien. Das AGV-Leitsystem 40 steuert die autonom im Lager agierenden AGVs. Es übernimmt die Routenplanung der einzelnen AGVs und setzt die Transportaufträge des Warehouse-Management-Systems 46 um, indem die einzelnen AGVs die Waren transportieren. Alternativ kann auch vorgesehen sein, dass das AGV-Leitsystem lediglich die Transportaufträge und Ladeaufträge unter Nennung der Start und Zielorte an die AGVs übermittelt und überwacht, die Routenplanung jedoch von jedem AGV autonom durchgeführt wird. Im Kontext dieser Erfindung stehen die Bereitstellung von Informationen für das Energiemanagementsystem 10 und das Umsetzen von Ladeempfehlungen für die AGVs im Mittelpunkt.

Über die Schnittstelle 38 erfolgt eine Steuerung der Ladegeräte von dem Energiemanagementsystem 10 aus. Die Schnittstelle 36 übernimmt die allgemeine Kommunikation zwischen dem Energiemanagement 10 und dem AGV-Leitsystem 40. Die Ladezustände der Batterien in den AGVs 44 wird über die Schnittstelle 48 abgefragt, ebenso wie die Restlaufzeit der Batterie. Über die Schnittstelle 36 gehen diese Informationen weiter an das Energiemanagementsystem 10. Die Schnittstelle 50 dient dazu, dass das AGV-Leitsystem 40 Informationen mit den Ladegeräten austauscht. So melden die Ladegeräte 42 dem AGV-Leitsystem 40, welche Batterien in den AGVs verfügbar sind und wie deren Restladezeit ist. Über die Schnittstelle 50 kann das AGV-Leitsystem Ladegeräte schalten, ebenso wie über die Schnittstelle 38 das Energiemanagementsystem diese auch direkt schalten kann. Über die Schnittstelle 52 können die für den Ladevorgang erforderlichen Informationen von der Batterie an das Ladegerät übertragen werden.

Das Warehouse-Management-System (WMS) 46 bezieht über eine Schnittstelle 54 Informationen von einem oder mehreren Logistikunternehmen 56. Der Austausch über die Schnittstelle 54 kann bidirektional erfolgen, so dass das Warehouse-Management-System 46 dem Logistikunternehmen 56 Informationen zu Belade- und Entladevorgängen in dem Lager zur Verfügung stellt, ebenso wie das Logistikunternehmen 56 Informationen zu Lieferung oder Abholung von Waren an das Warehouse-Management-System 46 leiten kann. Das Logistikunternehmen 56 ermittelt die voraussichtliche Ankunftszeit von Lieferungen, wobei es sich hierzu auf die Informationen zu ihren eigenen LKWs 58 und Fremd-LKWs von externen Speditionen 60 zurückgreift. Das Logistikunternehmen 56 kann zudem auf allgemein verfügbare Daten, wie beispielsweise Wetterdaten 62 und Stauinformationen 64, zurückgreifen, um Verzögerungen bei der Lieferung zu berücksichtigen.

Das Warehouse-Management-System 46 ist zudem mit dem Produktionssystem 66 verbunden und empfängt von diesen Informationen über den Bedarf an Waren für die Produktion bzw. Informationen über produzierte Güter, falls es sich um einzulagernde Zwischenprodukte handelt.

In dem Warehouse-Management-System 46 sind zudem die Orte der im Lager sich befindlichen Waren gespeichert und auch die freien Lagerplätze. Freie Lagerplätze für angelieferte Ware werden mittels des Warehouse-Management-Systems zugewiesen. Dies bedeutet, dass dem AGV-Leitsystem 40 mittels der Schnittstelle 68 für eine bestimmte Ware der Ort der Einlagerung mitgeteilt wird. Das AGV-Leitsystem wählt ein für den Transportauftrag geeignetes AGV aus und gibt diesen Ort dann als Zielpunkt an das die Ware transportierende AGV weiter und ermittelt ggf. auch bereits die zu fahrende Route. In gleicher Weise wird mittels der Schnittstelle 68 bei einer Auslagerung einer Ware der anzufahrende Lagerplatz, beispielsweise ein Regalfach, und der Zielort der Ware von dem Warehouse-Management-System 46 an das AGV Leitsystem 40 übermittelt. Das AGV Leitsystem weist dann einen Transportauftrag mittels der Schnittstelle 48 einem AGV zu, welches für den Transportauftrag besonders geeignet ist, weil es momentan oder in kürze frei ist und sich beispielsweise in der Nähe aufhält oder eine für den Transportauftrag entsprechend geladene Batterie aufweist. Ggf. erstellt das AGV-Leitsystem 40 auch die abzufahrende Route für das AGV und übermittelt diese mittels der Schnittstelle 48.

Grundsätzlich kann das Warehouse-Management-System 46 über die Schnittstelle 54 auch Wunschlieferzeiten und Wunschabholzeiten für bestimmte Lieferungen an die Logistikunternehmen 56 übermitteln. Auf diese Art und Weise kann ein reibungsloser Ablauf beim Ein- und Auslagern von Gütern gewährleistet werden und zudem erfolgt ein kostenoptimales Laden der Batterien für die AGVs. Hier werden die Informationen aus dem Warehouse-Management-System 46 über die Schnittstelle 68 zur Verfügung gestellt.

Die Planung der Ladevorgänge der AGV-Flotte erfolgt durch das Energiemanagementsystem 10. Zu diesem Zweck erhält das Energiemanagementsystem 10 von dem AGV-Leitsystem 40 über die Schnittstelle 36 und/oder von den Ladegeräten 42 über die Schnittstelle 38 Informationen über den aktuellen Ladezustand der AGVs 44 und auch den zukünftigen Energiebedarf der AGV-Flotte. Diesem Energiebedarf liegen die Transportaufträge aus dem Warehouse-Management-System 46 zugrunde. Auf dieser Basis plant das Energiemanagementsystem 10 mittels des Moduls 12 die Ladevorgänge der AGVs 44, um den Betrieb des Lagers sicherzustellen. Zusätzlich werden hierbei mittels der Module 14 - 18 weitere Anforderungen, wie Marktpreise, Spannungsspitzen und das Verstetigen der Energieentnahme aus dem Netz berücksichtigt. Aus der in dieser Weise optimierten Ladestrategie werden durch das Energiemanagementsystem 10 konkrete Ladeaufträge, also Ladezeitpunkte und Ladedauern bzw. gewünschte Batterieladezustände für jedes AGV 44 ermittelt und an das AGV-Leitsystem 40 mittels der Schnittstelle 36 übertragen. Je nachdem, ob ein AGV 44 geladen oder diesem Energie zur Einspeisung in das Netz entnommen werden soll, muss dem entsprechenden Ladegerät 42 ein solcher Auftrag übermittelt werden. Dies kann direkt über die Schnittstelle 38 aus dem Energiemanagementsystem 10, aus dem AGV-Leitsystem mittels der Schnittstelle 50 oder durch das AGV 44 mittels der Schnittstelle 52 erfolgen. Das AGV-Leitsystem plant die von dem Energiemanagementsystem 10 empfangenen Ladeaufträge, indem den AGVs 44 die anzufahrenden Ladegeräte 42 sowie die Ladedauern und ggf. die hierfür zu befahrenden Routen übermittelt werden. Ggf. kann die Ladedauer auch direkt mittels der Schnittstelle 50 an die Ladegeräte 42 übertragen werden.

### Bezugszeichenliste

- 10: Energiemanagementsystem
- 12: Modul für produktionsoptimiertes Laden
- 14: Modul für aktives Lastmanagement
- 16: Modul für inverses Laden bzw. Zurückspeisen in das elektrische Versorgungsnetz
- 18: Modul für marktpreisoptimiertes Laden
- 20: Energiehandelmodul
- 22: elektrisches Versorgungsnetz
- 24: Netzbetreiber
- 26: weitere Energieproduzenten
- 28: Schnittstelle
- 30: Lokale Energieerzeugung
- 32: Speicher
- 34: Photovoltaikanlage
- 36: Schnittstelle
- 38: Schnittstelle
- 40: AGV-Leitsystem
- 42: Ladegeräte
- 44: AGVs
- 46: Warehouse-Management-System
- 48: Schnittstelle
- 50: Schnittstelle
- 52: Schnittstelle
- 54: Schnittstelle
- 56: Logistikunternehmen
- 58: eigene Lkws
- 60: Fremd-Lkws von externen Speditionen
- 62: Wetterdaten
- 64: Stauinformationen
- 68: Schnittstelle

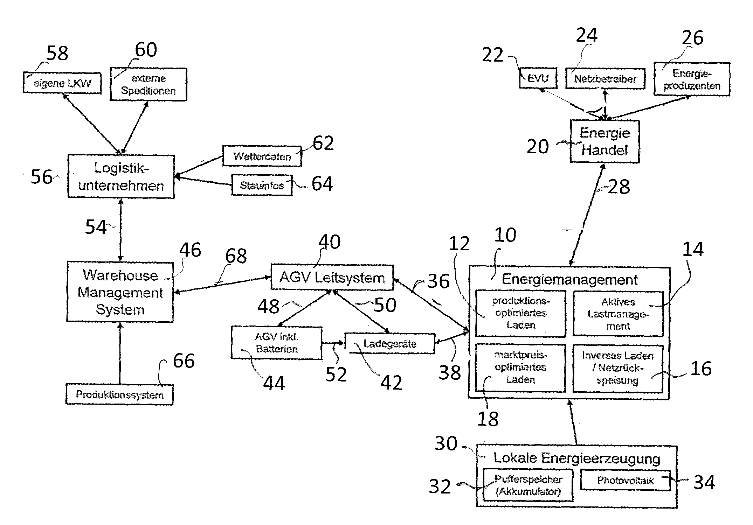

## Patentansprüche

1. System zum Energiemanagement von batteriegespeisten Flurförderzeugen (44), dass eine Energiesteuereinheit (10) aufweist, an der
- Daten zum aktuellen Ladezustand der Batterien von mehreren Flurförderzeugen anliegen,
- Daten zu einem zu erwartenden Energiebedarf der Flurförderzeuge und
- Daten zur Belegung von Ladegeräten anliegen,
wobei die Energiesteuereinheit (10) ausgebildet ist, aus den anliegenden Daten (36, 38) zu ermitteln, wann ein Flurförderzeug an einem verfügbaren Ladegerät (42) geladen und wann es eingesetzt wird, wobei ein Leitsystem (40) für die Flurförderzeuge dazu ausgebildet ist, Fahraufträge für einzelne Flurförderzeuge zu generieren und an diese zu senden und Daten von einem Lagerverwaltungssystem (46) zu empfangen und diese bei der Bestimmung des zu erwartenden Energiebedarfs der Flurförderzeuge auszuwerten

2. System nach Anspruch 1, **dadurch gekennzeichnet, dass** die Flurförderzeuge mindestens ein autonom geführtes Fahrzeug (AGV) umfassen, die einen Fahrauftrag empfangen und diesen automatisch umsetzen.

3. System nach einem der Ansprüche 1 oder 2, **dadurch gekennzeichnet, dass** das Leitsystem (40) ausgebildet ist, von der Energiesteuereinheit einen Ladebefehl für ein Flurförderzeug zu empfangen und diesen an das entsprechende Flurförderzeug weiterzuleiten.

4. System nach einem der Ansprüche 1 bis 3, **dadurch gekennzeichnet, dass** die Energiesteuereinheit dazu ausgebildet ist, Kenngrößen für einen aktuellen Zustand eines Stromnetzes zu empfangen und einen Lade- und/oder einen Entladevorgang von mindestens einer der Batterien zur Stützung des Stromnetzes zu steuern.

5. System nach einem der Ansprüche 1 bis 4, **dadurch gekennzeichnet, dass** die Energiesteuereinheit dazu ausgebildet ist, zwischen mindestens zwei unterschiedlichen elektrischen Versorgungsnetzen (30, 20) zur Versorgung der Ladegeräte auszuwählen und entsprechend einem aktuellen Bezugspreis für elektrische Leistung zwischen den elektrischen Versorgungsnetzen auszuwählen.

6. System nach einem der Ansprüche 1 bis 5, **dadurch gekennzeichnet, dass** die Energiesteuereinheit dazu ausgebildet ist, Ladegeräte dahingehend anzusteuern, dass elektrische Leistung aus einer angeschlossenen Batterie in das elektrische Versorgungsnetz eingespeist wird.

7. System nach Anspruch 6, **dadurch gekennzeichnet, dass** die Energiesteuereinheit dazu ausgebildet ist, abhängig von einem aktuellen Bezugspreis für elektrische Leistung in das Versorgungsnetz einzuspeisen.

8. System nach Anspruch 1, **dadurch gekennzeichnet, dass** das Lagerverwaltungssystem dazu ausgebildet ist, Daten von einem Logistikunternehmen (56) zu ein- und auszulagernden Waren zu empfangen und an das Leitsystem (40) zur Ermittlung des voraussichtlichen Bedarfs weiterzuleiten.

9. System nach Anspruch 8, **dadurch gekennzeichnet, dass** die von dem Lagerverwaltungssystem empfangenen Daten von dem Logistikunternehmen (56) eine oder mehrere der folgenden Angaben enthalten: Angaben zu einer ein- bzw. auszulagernden Ware, Angaben zu einer Ankunfts- bzw. Abholzeit der Ware, Angaben zur Stückzahl der Ware, Angaben zu etwaigen Verspätungen bei Anlieferung bzw. Abholung der Ware, Angaben zu einem Zeitfenster für das Anliefern bzw. Abholen der Ware und Angaben zu besonderen Transporterfordernissen für die Ware.

10. System nach Anspruch 8 oder 9, **dadurch gekennzeichnet, dass** das Lagerverwaltungssystem Nachrichten an das oder die Logistikunternehmen (56) sendet, die eine oder mehrere der folgenden Angaben enthalten: Angaben zu einer ein- bzw. auszulagernden Ware, Angaben zu einer Ankunfts- bzw. Abholzeit der Ware, Angaben zur Stückzahl der Ware, Angaben zu einem Zeitfenster für das Anliefern bzw. Abholen der Ware und Angaben zu besonderen Transporterfordernissen für die Ware.

## Claims

1. An energy management system for battery-powered industrial trucks (44), having an energy control unit (10) to which
- data on the current state of charge of the batteries of multiple industrial trucks are applied,
- data on an expected energy demand of the industrial trucks are applied, and
- data on the occupancy of charging devices are applied,
wherein the energy control unit (10) is designed to ascertain when an industrial truck is being charged at an available charging device (42) and when it is being used from the applied data (36, 38), wherein a guidance system (40) for the industrial trucks is designed to generate driving tasks for individual industrial trucks and to send said driving tasks thereto and to receive data from a warehouse management system (46) and to evaluate said data when determining the expected energy demand of the industrial trucks.

2. The system according to claim 1, **characterized in that** the industrial trucks comprise at least one autonomously guided vehicle (AGV), which receive a driving task and implement same automatically.

3. The system according to one of claims 1 or 2, **characterized in that** the guidance system (40) is designed to receive a charging command for an industrial truck from the energy control unit and to forward said charging command to the corresponding industrial truck.

4. The system according to one of claims 1 to 3, **characterized in that** the energy control unit is designed to receive characteristic variables for a current state of a power grid and to control a charging and/or discharging process of at least one of the batteries in order to support the power grid.

5. The system according to one of claims 1 to 4, **characterized in that** the energy control unit is designed to select between at least two different electrical supply grids (30, 20) for supplying the charging devices and to select between the electrical supply grids according to a current purchase price for electrical power.

6. The system according to one of claims 1 to 5, **characterized in that** the energy control unit is designed to actuate charging devices in such a way that electrical power is fed into the electrical supply grid from a connected battery.

7. The system according to claim 6, **characterized in that** the energy control unit is designed to feed into the supply grid depending on a current purchase price for electrical power.

8. The system according to claim 1, **characterized in that** the warehouse management system is designed to receive from a logistics company (56) data relating to goods to be put into and removed from storage and to forward said data to the guidance system (40) in order to ascertain the likely demand.

9. The system according to claim 8, **characterized in that** the data from the logistics company (56) received by the warehouse management system contain one or more of the following items of information: information about a good to be put into or else removed from storage, information about an arrival or else pickup time of the good, information about the quantity of the good, information about any delays in delivering or else picking up the good, information about a time slot for delivering or else picking up the good, and information about special transport requirements for the good.

10. The system according to claim 8 or 9, **characterized in that** the warehouse management system sends messages to the logistics company or companies (56) which contain one or more of the following items of information: information about a good to be put into or else removed from storage, information about an arrival or else pickup time of the good, information about the quantity of the good, information about a time slot for delivering or else picking up the good, and information about special transport requirements for the good.

## Revendications

1. Système de gestion énergétique de chariots de manutention (44) alimentés par batterie, présentant une unité de contrôle de l'énergie (10), à laquelle sont fournies
- des données relatives à l'état de charge actuel des batteries de plusieurs chariots de manutention,
- des données relatives à un besoin énergétique attendu des chariots de manutention, et
- des données relatives à l'occupation d'appareils de charge,
dans lequel l'unité de contrôle de l'énergie (10) est conçue pour déterminer, à partir des données (36, 38) fournies, à quel moment un chariot de manutention est chargé sur un appareil de charge (42) disponible et à quel moment il est utilisé, dans lequel un système de commande (40) destiné aux chariots de manutention est conçu pour générer des ordres de déplacement destinés à des chariots de manutention individuels et les envoyer à ceux-ci, et pour recevoir des données provenant d'un système de gestion des stocks (46) et les évaluer lors de la détermination du besoin énergétique attendu des chariots de manutention.

2. Système selon la revendication 1, **caractérisé en ce que** les chariots de manutention comportent au moins un véhicule à guidage autonome (AGV), lequel reçoit un ordre de déplacement et l'exécute automatiquement.

3. Système selon l'une des revendications 1 ou 2, **caractérisé en ce que** le système de commande (40) est conçu pour recevoir un ordre de charge destiné à un chariot de manutention à partir de l'unité de contrôle de l'énergie, et pour le transmettre au chariot de manutention correspondant.

4. Système selon l'une des revendications 1 à 3, **caractérisé en ce que** l'unité de contrôle de l'énergie est conçue pour recevoir des grandeurs caractéristiques relatives à un état actuel d'un réseau électrique et pour commander un processus de charge et/ou de décharge de l'une au moins des batteries afin de soutenir le réseau électrique.

5. Système selon l'une des revendications 1 à 4, **caractérisé en ce que** l'unité de contrôle de l'énergie est conçue pour choisir entre au moins deux réseaux d'alimentation électrique (30, 20) différents destinés à l'alimentation des appareils de charge, et pour choisir le réseau d'alimentation électrique en fonction d'un prix de référence de la puissance électrique.

6. Système selon l'une des revendications 1 à 5, **caractérisé en ce que** l'unité de contrôle de l'énergie est conçue pour actionner des appareils de charge afin d'injecter de la puissance électrique dans le réseau d'alimentation électrique à partir d'une batterie connectée.

7. Système selon la revendication 6, **caractérisé en ce que** l'unité de contrôle de l'énergie est conçue pour injecter de la puissance électrique dans le réseau d'alimentation électrique en fonction d'un prix de référence actuel de celle-ci.

8. Système selon la revendication 1, **caractérisé en ce que** le système de gestion des stocks est conçu pour recevoir, à partir d'une entreprise de logistique (56), des données relatives à des marchandises à stocker et déstocker et pour les transmettre au système de commande (40) en vue de la détermination du besoin prévu.

9. Système selon la revendication 8, **caractérisé en ce que** les données de l'entreprise de logistique (56) reçues par le système de gestion des stocks comprennent l'une ou plusieurs des informations suivantes : des informations relatives à une marchandise à stocker ou à déstocker, des informations relatives à l'heure d'arrivée ou d'enlèvement de la marchandise, des informations relatives au nombre d'unités de la marchandise, des informations relatives à d'éventuels retards de livraison ou d'enlèvement de la marchandise, des informations relatives à une plage horaire de livraison ou d'enlèvement de la marchandise et des informations relatives à des exigences de transport particulières de la marchandise.

10. Système selon la revendication 8 ou 9, **caractérisé en ce que** le système de gestion des stocks envoie des messages à l'entreprise ou aux entreprises de logistique (56), lesquels comprennent l'une ou plusieurs des informations suivantes : des informations relatives à une marchandise à stocker ou à déstocker, des informations relatives à l'heure d'arrivée ou d'enlèvement de la marchandise, des informations relatives au nombre d'unités de la marchandise, des informations relatives à une plage horaire de livraison ou d'enlèvement de la marchandise et des informations relatives à des exigences de transport particulières de la marchandise.
